# EUROPEAN PATENT SPECIFICATION

(11) **EP 3 711 870 B1**
(45) Date of publication and mention of the grant of the patent: **22.12.2021**
(21) Application number: 20162506.8
(22) Date of filing: 11.03.2020
(51) Int. Cl.: B07C 5/22, B07C 5/36

(54) **AUTOMATIC WEIGHT SEPARATOR FOR STICK PACKAGED PRODUCTS**
AUTOMATISCHER GEWICHTSSEPARATOR FÜR PRODUKTE IN STICKVERPACKUNGEN
SÉPARATEUR AUTOMATIQUE EN FONCTION DE LEUR POIDS POUR DES PRODUITS DE TYPE BÂTONNETS EMBALLÉS EN SACHETS

(30) Priority: 18.03.2019 KR 20190030337
(43) Date of publication of application: 23.09.2020
(73) Proprietor: Intechkorea Co., Ltd., Incheon 22827 (KR)
(72) Inventor: CHO, Hwi Do, 03670 Seoul (KR); LEE, Sang Ho, 07638 Seoul (KR)
(74) Representative: Romano, Giuseppe

(56) References cited:
- KR-Y1- 200 464 257

## Description

### CROSS-REFERENCE TO RELATED APPLICATION

This application claims priority of Korean Patent Application No. 10-2019-0030337, filed on 18 March 2019, in the Korean Intellectual Property Office.

### BACKGROUND OF THE INVENTION

### Field of the Invention

The present invention relates to a weight separator and more particularly, to an automatic weight separator having each measuring and sorting type capable of automatically sorting normal products and defective products by simultaneously performing conveying and weight-checking of stick packaging products.

### Description of the Related Art

Favorite foods such as coffee and tea, instant foods, or health supplements are packaged and stored in one-time packaging containers for convenient drinking and easy portability during moving. For example, in the case of coffee mix, coffee, sugar, cream, etc. are mixed in a sealed pack in the form of powder, and in the case of tea, tea leaves, extract powder, granules, sugar, etc. are mixed to be packaged and sold in the form of elongated sticks or pouches. The packaged products packaged as described above have been sorted into normal products and defective products after measuring the weight by the weight separator such as a scale, but there is a problem that productivity is lowered because it does not meet a mass production process.

In Korean Utility Model Registration No. 20-0464257 (published on January 9, 2013), there is disclosed a weight separator of stick packaging products which includes a convey unit which is provided with a cutter and a holder, has a plurality of convey pipes vertically erected, and includes a plurality of shooters formed below the convey pipes, a plurality of impellers formed on front sides of the shooters and having storage spaces which are divided into a plurality of partition walls, a plurality of rotary motors in which rotary shafts are connected to the impellers to provide a rotational force, a load sensor for measuring the weight of the products inserted in the storage spaces; a control unit that receives the weight of the products measured from the load sensor and sorts the products, and a conveyor that rotates and conveys the products by receiving the sorting result from the control unit.

However, the above-described related art is a semi-automatic device, not an automated device, and since the normal products and the defective products sorted by the weight measurement are mixed, secondary separation is required, automatic packing for the normal products is difficult, and automatic counting during packaging is difficult. In addition, there is a problem in that since a worker has to pick out the defective products directly from a defective box, productivity and work efficiency are reduced, and since the impeller and the belt are not easily separated, maintenance and repair such as cleaning of foreign substances are not easy.

### SUMMARY OF THE INVENTION

An object of the present invention as a fully automated device capable of each measurement and each sorting is to provide a device which enables automated packaging for normal products, automation of subsequent lines, counting and packaging accurate quantities, independent weight-checking and sorting of defective products according to an individual control for each row, and greatly increasing productivity and operation efficiency by automatically separating and recovering the sorted normal products and defective products.

The present invention provides an automatic weight separator having each measuring and sorting type comprising: a frame unit in which a plurality of frames are connected; an introducing unit in which a plurality of chutes are coupled to the frame unit and provided in multiple rows to be inclined downward toward the front side to introduce a stick packaging product through an upper inlet and discharge the stick packaging product to a lower outlet; a measuring unit which is provided below the introducing unit and includes a plurality of rotary motors to provide a rotational force to impellers, impellers rotatably connected to the rotary motors in both directions and storing the stick packaging products falling from the chutes, and a measurement sensor provided below the rotary motor to measure the weight of the stick packaging products stored in the impellers; a control unit which determines normal products and defective products by receiving a measurement signal from the measurement sensor, controls the rotary motors according to the determining result to rotate the impellers to one side or the other side, and sorts the normal products and the defective products; a driving unit which includes a driving motor provided on one side below the frame unit, a rotary shaft rotating by a driving force of the driving motor and provided in a lateral direction, and a friction sheet attached to an outer surface of the rotary shaft to drive a belt unit by a friction force; and a belt unit formed on a lower side of the impeller, orthogonal to the rotary shaft, and driven by the frictional force with the friction sheet to convey the normal products falling from the impellers, and a sorting unit formed at the side of the belt unit and having a through hole through which the defective products falling from the impellers pass.

According to the present invention, a fully automated device capable of each measurement and each sorting enables automated packaging for normal products, automation of subsequent lines, counting and packaging accurate quantities, independent weight-checking and sorting of defective products according to an individual control for each row, and greatly increasing productivity and operation efficiency by automatically separating and recovering the sorted normal products and defective products.

Further, according to the present invention, since the belt units in multiple rows are driven by a single driving motor by the friction force, a device configuration is not complicated and the normal products sorted by the multiple rows are simultaneously discharged to perform an efficient operation, the distortion of the impeller is prevented by repeated rotation, the mixing of the normal products and the defective products is blocked, the impeller is detached with one touch, and the belt unit is also easily separated to simplify maintenance and repair such as cleaning of foreign substances.

### BRIEF DESCRIPTION OF THE DRAWINGS

The above and other features of the present invention will now be described in detail with reference to certain embodiments thereof illustrated the accompanying drawings which are given hereinbelow by way of illustration only, and thus are not limitative of the present invention, and wherein:
FIG. 1 is a perspective view of an automatic weight separator of the present invention;
FIG. 2 is a front view of the automatic weight separator of the present invention;
FIG. 3 is a plan view of the automatic weight separator of the present invention;
FIGS. 4A and 4B are a left side view and a right side view of the automatic weight separator of the present invention, respectively;
FIG. 5 is a lateral cross-sectional view illustrating a connecter;
FIG. 6A is a perspective view of an impeller, FIG. 6B is a lateral cross-sectional view of the impeller, and FIGS. 6C is an exploded perspective view illustrating a connection relationship between the impeller and the connector;
FIG. 7 is a view illustrating a rotation shaft and a friction sheet of a driving unit;
FIGS. 8A to 8C are views illustrating a belt unit; and
FIG. 9 is a view illustrating a sorting process of a sorting unit.

### DETAILED DESCRIPTION OF EXEMPLARY EMBODIMENTS

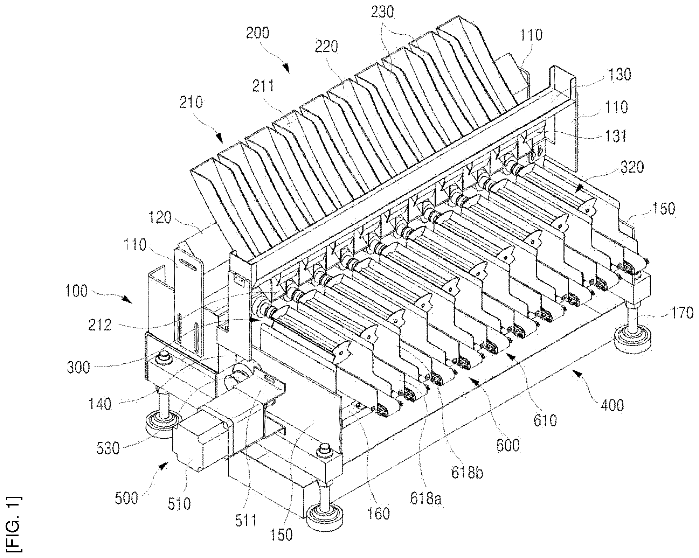

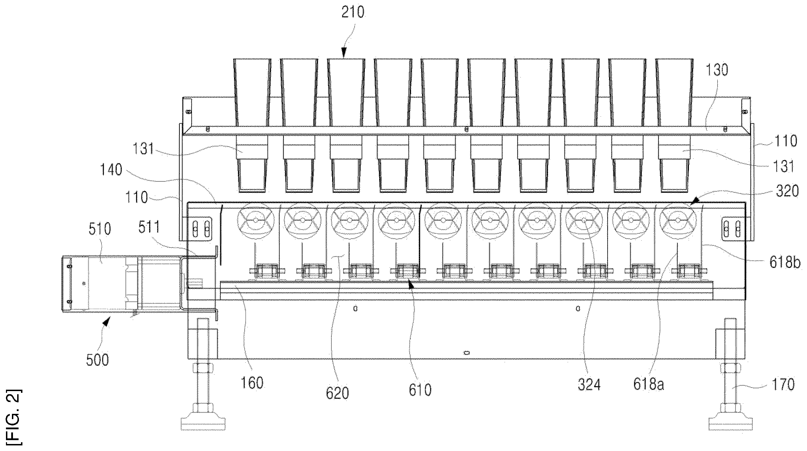

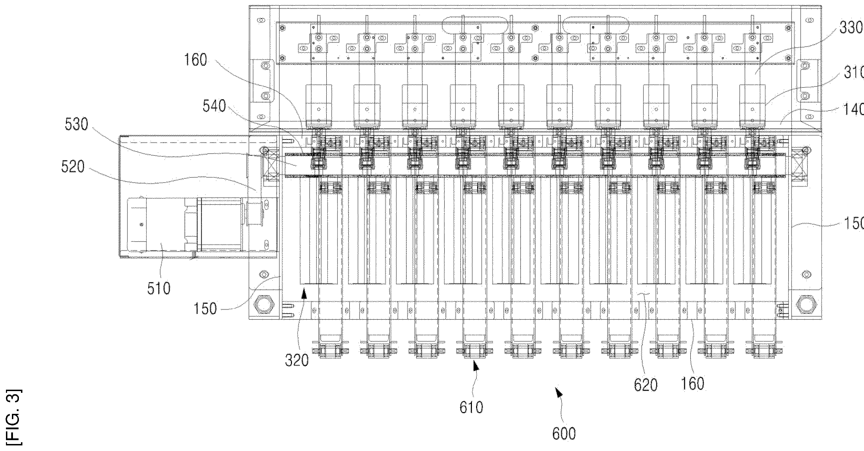

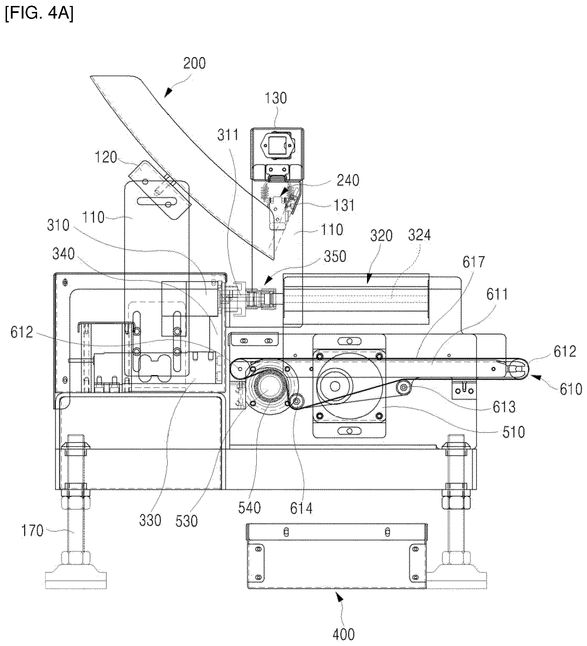

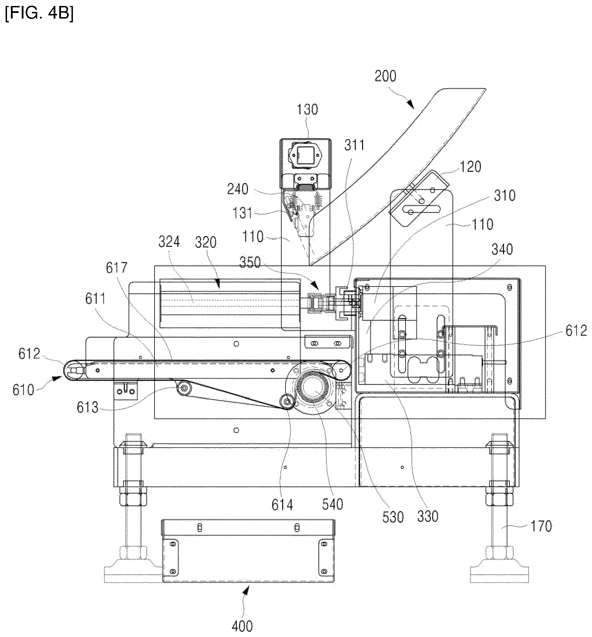

Referring to FIGS. 1 to 4B, a frame unit 100, an introducing unit 200, a measuring unit 300, a control unit (not illustrated), a driving unit 500, and a sorting unit 600 are included.

The frame unit 100 is formed by connecting a plurality of frames, wherein a base frame 140 is provided in a lateral direction and the measurement unit 300 is provided in the base frame 140, upper side frames 110 are coupled to both front and rear sides of the base frame 140, respectively, a rear frame 120 is coupled to a rear side between the two upper side frames 110 in a lateral direction to support a plurality of chutes 210, a front frame 130 is coupled to a front side between the two upper side frames 110 in a lateral direction, a plurality of sensor brackets 131 are coupled to the front frame 130, and a sensor 240 is provided in the sensor frame 131.

Lower side frames 150 are coupled to both front sides of the base frame 140, respectively, and support frames 160 are coupled to the front and rear sides between the both lower side frames 150, respectively, in a lateral direction to support the belt unit 610, and a leg 170 supporting the frame unit 100 is formed below each lower side frame 150.

In the introducing unit 200, a plurality of chutes 210 are coupled to the rear frame 120, the chutes 210 are provided in multiple rows to be inclined downward toward the front side, and the chutes 210 introduces each stick packaging product though an upper inlet 211 to discharge the stick packaging product to a lower outlet 212.

The chute 210 includes a chute plate 220 having a width gradually narrower and curved toward the lower side so that the stick packaging product slides thereon, and a side plate 230 placed on both sides of the chute plate 220 to prevent the stick packaging product from deviating, and when the sensor 240 is provided on the sensor bracket 131 of the front frame 130 provided in front of the chute 210 to individually sense the stick packaging product falling from the chute 210 to the impeller 320 and transmit a sensing signal to the control unit, the control unit transmits a control signal to the measuring unit 300 and the driving unit 500 to prepare the measuring and sorting.

The measuring unit 300 is provided in the base frame 140 below the introducing unit 200, wherein a plurality of rotary motors 310 are provided at the rear side of the base frame 140 to provide a rotational force to the impeller 320 provided at the front side of the base frame 140, the impeller 320 is rotatably connected to the motor shaft 311 of the rotary motor 310 in both directions, and the impeller 320 includes a plurality of storage spaces to temporarily receive and store the stick packaging product falling from the chutes 210.

A measurement sensor 330 is connected to the lower side of the rotary motor 310 through a connection bracket 340, and the measurement sensor 330 is zero-adjusted with a high-precision load cell in advance to measure the weight of the stick packaging products stored in the impeller 320 and transmit a measurement signal to the control unit.

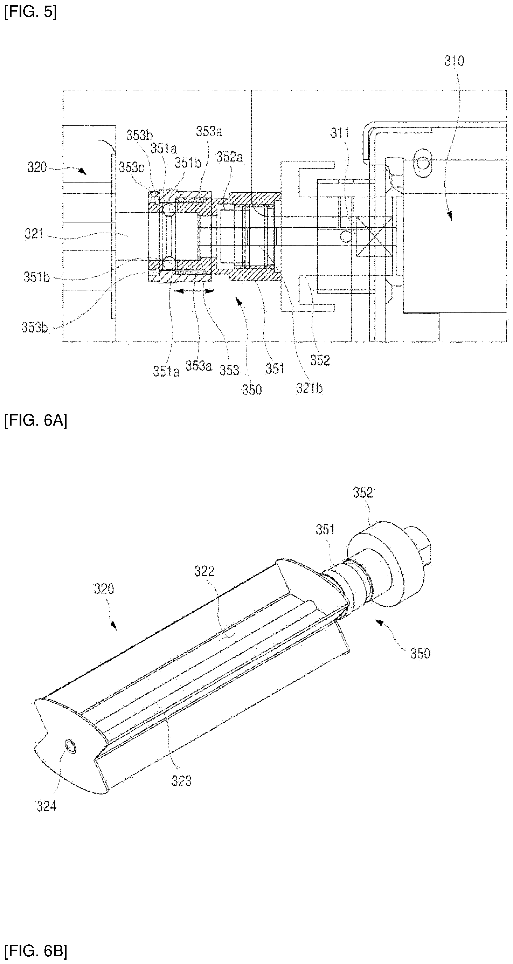

Referring to FIGS. 5 to 6B, the impeller 320 has a connection shaft 321 formed at one side thereof to be inserted and fastened to the connector 350, and the connection shaft 321 has a ring-shaped mounting groove 321a formed along a circumference thereof, a flat fixing bar 321b is formed at the end thereof, and an insertion protrusion 321c protrudes from the fixing bar 321b.

The impeller 320 is partitioned to be divided into a plurality of storage spaces 322, the storage space 322 has an inverted trapezoidal section to safely receive the falling stick packaging products, and rounded bottom protrusions 323 are formed to protrude from the center of the bottom surface in a longitudinal direction so that the stored stick packaging products slide during the rotation of the impeller 320 to be easily separated. In addition, a central shaft 324 connected to the connection shaft 321 in the longitudinal direction is embedded in the center of the impeller 320 to prevent the distortion of the impeller according to a repeated rotation use.

The measuring unit 300 connects the connection shaft 321 of the impeller 320 and the motor shaft 311 of the rotary motor 310 to allow the impeller 320 to be detached with one touch.

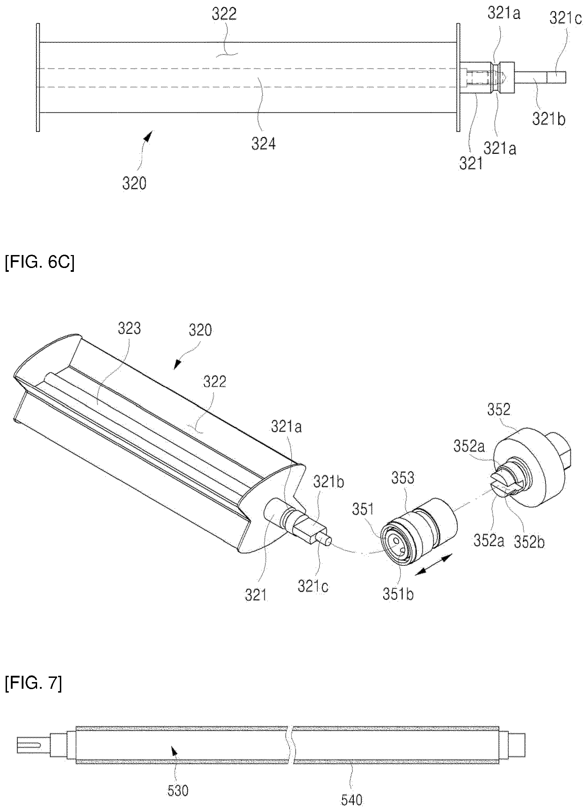

Referring to FIG. 6C, in the connector 350, a connection pipe 351 is provided on one side thereof so that the connection shaft 321 is inserted and fastened to one side of the connection pipe 351, a plurality of through holes 351a are through-formed along the circumference of the inlet of the connection pipe 351, and spherical balls 351b are mounted on the through holes 351a to be movable in and out of the through holes 351a.

The connector 350 is provided with a shaft holder 352 on the other side thereof so that the motor shaft 311 is inserted into the inside, and the shaft holder 352 is provided with a fastening protrusion 352a which is inserted into the other side of the connection pipe 351 to be screwed. To this end, the fastening protrusion 352a has a screw thread formed on an outer circumferential surface thereof, a straight fixing groove 352b is formed at the end thereof, and an insertion hole (not illustrated) is formed on the bottom surface of the fixing groove. Thus, after the connection shaft 321 is inserted into one side of the connection pipe 351, the insertion protrusion 321c is inserted into an insertion hole, and the fixing bar 321b is fixed to the fixing groove 352b so that the connection shaft 321 and the impeller 320 are firmly fixed.

A pressing pipe 353 is fastened to the outside of the connection pipe 351, a ring-shaped ring protrusion 353b protrudes from the middle of the inside of the pressing pipe 353 to press the ball 351b, a ring-shaped open groove 353c is formed at one side of the ring protrusion 353b, a gap is formed at the other side of the ring protrusion 353b, and a spring 353a is interposed in the gap and presses the pressing pipe 353 to the other side and then the pressing pipe 353 returns to one side when the force is released.

That is, while the pressing pipe 353 is pressed to the other side, the connection shaft 321 connected to the impeller 320 is inserted into the connection pipe 351 of the connector 350, and then when the force applied to the pressing pipe 353 is released, the ring protrusion 353b presses the ball 351b inward while the pressing pipe 353 returns to one side, so that the ball 351b is moved and fastened to the mounting groove 321a of the connection shaft 321. Thereafter, in the case where maintenance and repair such as cleaning of foreign substances are required, when the pressing pipe 353 is pressed to the other side, the ring protrusion 353b moves to the other side, and the ball 351b pressed by the ring protrusion 353b deviates from the mounting groove 321a to move toward the open groove 353c, so that the impeller 320 may be easily separated with one touch.

The control unit receives a measurement signal from the measurement sensor 330 to determine normal products and defective products, and controls the rotary motor 310 according to the determination result to sort the normal products and the defective products by rotating the impeller 320 to one side or the other side.

In the driving unit 500, the motor bracket 511 is coupled to the lower side frame 150 of one side thereof, the driving motor 510 is provided in the motor bracket 511, a rotary shaft 530 is provided between the lower side frames 150 provided on both sides in a lateral direction, the rotary shaft 530 is connected to the driving motor 510 and the driving belt 520 to rotate by receiving a driving force. Referring to FIG. 7, a friction sheet 540 made of a non-slip material such as silicone rubber is attached to the outer surface of the rotary shaft 530 to be in contact with the convey belt 617 of the belt unit 610 so as to drive the belt unit 610 by the frictional force.

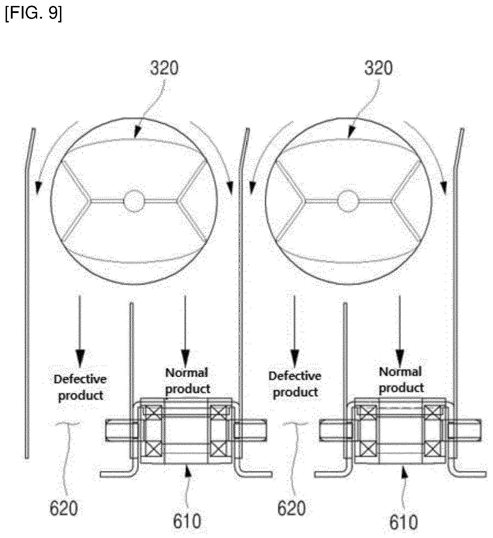

The sorting unit 600 is formed at a lower side for each impeller 320, a through hole 620 is formed at one side directly below the impeller 320, and the belt unit 610 is formed at the other side directly below the impeller 320. That is, referring to FIG. 9, the impeller 320 is provided at the center of the entire width of the belt unit 610 and the through hole 620. The belt unit 610 is disposed to be orthogonal to the rotary shaft 530 and driven by a frictional force with the friction sheet 540 to convey the normal products falling from the impeller 320 to a subsequent line, and the through hole 620 is formed through the side of the belt unit 610, the defective products falling from the impeller 320 pass downward without interference, and the defective products passing through the through hole 620 are received in a recovery box 400 placed on the bottom.

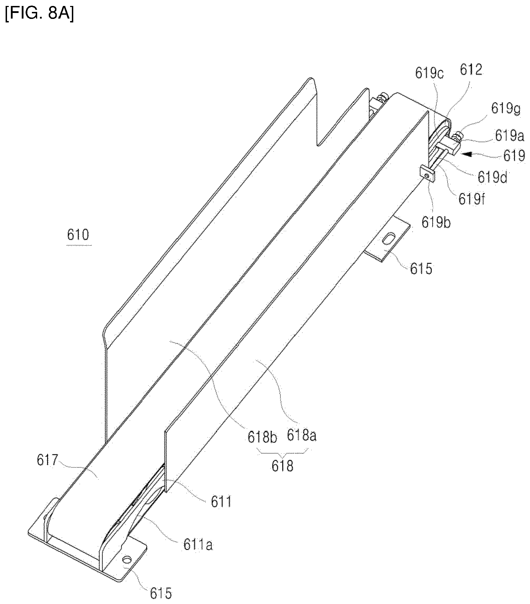

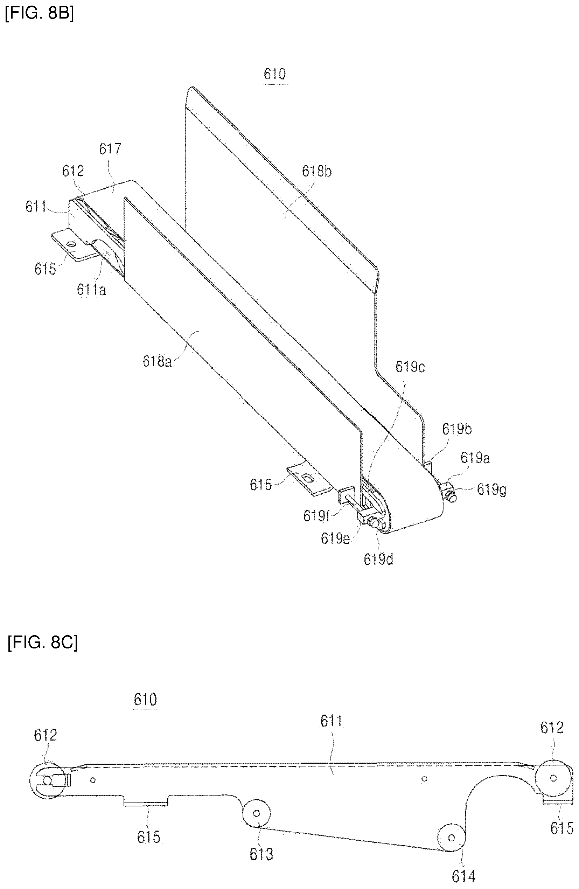

Referring to FIGS. 8A to 8C, the belt unit 610 is specifically designed to have a structure that may be smoothly driven by receiving the frictional force of the friction sheet 540 without loss. To this end, a body 611 of the belt unit 610 is provided with a round groove 611a formed to correspond to a cylindrical friction sheet 540 at the rear side thereof to maintain a state in which a part of the friction sheet 540 is inserted to the round groove 611a. In addition, rotary rollers 612 are rotatably provided at front and rear sides of the body 611, respectively, a downward guide roller 613 is provided in the middle of the lower portion of the body 611 to guide the convey belt 617 to pass in contact with the top of the downward guide roller 613 and then be directed in a downward diagonal direction, and an upward guide roller 614 is provided at the rear side of the lower portion of the body 611 to guide the convey belt 617 struck downward to be directed along the round groove 611a and then be in contact with a curved surface of the friction sheet 540 over a large area. As a result, the convey belt 617 is guided by the downward guide roller 613 and the upward guide roller 614 while being rolled on the rotary rollers 612 at the front and rear sides to greatly increase a contact area with the friction sheet 540 as compared with being in contact with the friction sheet 540 while the convey belt 617 is flat, so that the convey belt 617 may be smoothly driven by the frictional force.

Fixing brackets 615 are formed at both front and rear sides of the body 611, respectively, and the fixing brackets 615 are fastened to the support frame 160 by a detachable member (not illustrated) such as bolts, and thus, when only the detachable member is released by using a tool, the belt unit 610 is also easily separated, thereby simplifying maintenance and repair such as cleaning of foreign substances.

Blocking plates 618 are provided in a vertical direction along both sides of the convey belt 617, and since the belt unit 610 and the through hole 620 are very closely located, the both blocking plates 618 may be constituted by a lower-layer plate 618a formed at one side to prevent the normal products from deviating and a high-layer plate 618b formed at the other side to be higher than the lower-layer plate 618a to prevent the insertion of the defective products falling from the impeller 320.

The belt unit 610 is provided with tension adjusting members 619 on both sides thereof to adjust the tension of the convey belt 617. The tension adjusting member 619 includes a shaft bar 619a connected to the shaft of the rotary roller 612 on both sides of the front rotary roller 612, a support piece 619b protruding outward from the body, an upper piece 619c and a lower piece 619d coupled between the body 611 and the shaft bar 619a and formed to be split into upper and lower portions, respectively, a moving hole 619e formed between the upper piece 619c and the lower piece 619d, an adjustment bolt 619f fastened with the shaft bar 619a through the support piece 619b, and a nut 619g fastened to the adjustment bolt 619f to restrict the movement of the shaft bar 619a. While the shaft bar 619a is moved forward and backward through the moving hole 619e by screwing with the shaft bar 619a when the adjustment bolts 619e on both sides rotate, the rotary roller 612 also moves together to adjust the tension of the convey belt 617 and rotates the nut 619g to be in contact with the shaft bar 619a and restrict the movement.

Hereinafter, an operation for implementing the automatic weight separator according to the present invention will be described in detail with reference to the drawings.

A plurality of stick packaging products are introduced to the inlet 211 of the chutes 210 arranged in multiple rows to be discharged to the outlet 212 and falls downward, and at this time, the sensor 240 senses the stick packaging product to transmit a sensing signal to the control unit. The control unit has received the sensing signal of the sensor 240 and then transmits an operation signal to the measuring unit 300 and the driving unit 500.

Next, each measurement sensor 330 measures the weight of the stick packaging product stored in the impeller 320 to transmit the measurement signal to the control unit, and the control unit compares a measurement value of each measurement signal received with a range of a predetermined reference value to determine the normal products and the defective products. In other words, if the measurement value corresponds to a value between a lower limit and an upper limit of the reference value, the product is determined as a normal product, and if the measurement value is out of the upper limit or the lower limit, the product is determined as a defective product, wherein a weight value of a packaging container of the stick packaging product may be excluded.

When the measurement of the weight of the stick packaging product is completed, the control unit rotates the rotary motor 310 forward or backward, so that the normal products stored in the impeller 320 fall into the belt unit 610 and the defective products stored in the impeller 320 are recovered in the recovery box 400 through the through holes 620.

The control unit rotates the rotary shaft 530 by driving the driving motor 510 of the driving unit 500 to simultaneously move the convey belts 617 of the belt unit 610 arranged in multiple rows by the frictional force of the friction sheet 540 and conveys the normal products falling from the impeller 320 to a subsequent line, thereby performing quantity counting and packaging.

Therefore, the present invention is a fully automated device capable of each measurement and each sorting, which enables automated packaging for normal products, automation of subsequent lines, counting and packaging accurate quantities, independent weight-checking and sorting of defective products according to an individual control for each row, and greatly increasing productivity and operation efficiency by automatically separating and recovering the sorted normal products and defective products.

## Claims

1. An automatic weight separator having each measuring and sorting type capability comprising:
a frame unit (100) in which a plurality of frames (140) are connected to each other;
an introducing unit (200) in which a plurality of chutes (210) are coupled to the frame unit (100) and provided in multiple rows to be inclined downward toward the front side to introduce and discharge stick packaging products;
a measuring unit (300) which is provided below the introducing unit (200) and includes a plurality of rotary motors (310) to provide a rotational force to impellers (320), impellers (320) rotatably connected to the rotary motors (310) in both directions and storing the stick packaging products falling from the chutes (210), and a measurement sensor (330) provided below the rotary motor (310) to measure the weight of the stick packaging products stored in the impellers (320);
a control unit which determines normal products and defective products by receiving a measurement signal from the measurement sensor (330), controls the rotary motors (310) according to the determining result to rotate the impellers (320) to one side or the other side, and sorts the normal products and the defective products;
a driving unit (500) which includes a driving motor (510) provided on one side below the frame unit (100), a rotary shaft (530) rotating by a driving force of the driving motor (510) and provided in a lateral direction, and a friction sheet (540) attached to an outer surface of the rotary shaft (530) to drive a belt unit (610) by a friction force;
the automatic weight separator being **characterized in that** it comprises a belt unit (610) which is formed on a lower side of the impeller (320), orthogonal to the rotary shaft (530), and driven by the frictional force with the friction sheet (540) to convey the normal products falling from the impellers (320), and includes a body (611) provided with a round groove (611a) formed at a rear side to correspond to the friction sheet (540), rotary rollers (612) provided on front and rear sides of the body (611), respectively, a downward guide roller (613) provided in the middle of the lower side of the body (611) to guide the convey belt (617) to the lower side, an upward guide roller (614) provided at the rear side of the lower side of the body (611) to guide the convey belt (617) struck downward to the friction member on the upper side thereof, a convey belt (617) rolled on front and rear rotary rollers (612) and guided by the upward guide roller (614) and the downward guide roller (613) to convey the normal products by the friction force of the friction sheet (540), and blocking plates (618) provided vertically at both sides of the convey belt (617), and a sorting unit (600) formed at the side of the belt unit (610) and having a through hole (620) through which the defective products falling from the impellers (320) pass.

2. The automatic weight separator of claim 1, wherein the chute (210) includes a chute plate (220) having a width gradually narrower and curved toward the lower side so that the stick packaging product slides thereon, and a side plate (230) placed on both sides of the chute plate (220) to prevent the stick packaging products from deviating, and a sensor is provided on the frame provided in front of the chute (210) to sense the stick packaging products falling to the impellers (320) and transmit a sensing signal to the control unit.

3. The automatic weight separator claim 1, wherein the measurement unit further includes a connector (650) for connecting a connection shaft (321) of the impeller (320) and a motor shaft (311) of the rotary motor (510) to allow the impeller (320) to be detached with one touch, wherein the connection shaft (321) has a ring-shaped mounting groove (321a) formed along a circumference, so that a part of the ball is inserted into the mounting groove (321a) when the connection shaft (321) is inserted and mounted to a connection pipe (351), and
the connector (650) includes a connection pipe (351) which is provided on one side thereof so that the connection shaft (321) is inserted and has a plurality of through holes (351a) formed along the circumference so that the balls are movable in and out of the through holes (351a), a shaft holder (352) which is provided on the other side thereof to be inserted with the motor shaft (351), and a pressing pipe (353) which has a spring (353a) interposed in an outer side of the connection pipe (351) to be moved to both sides by pressing and releasing and has a ring-shaped ring protrusion formed inside to press the balls, wherein the pressing pipe (353) moves to both sides to press and release the balls of the ring protrusion and enable one-touch detachment for the connection shaft (321).

4. The automatic weight separator of claim 1, wherein the impeller (320) is partitioned to be divided into a plurality of storage spaces (322), wherein the storage space (322) has an inverted trapezoidal section, rounded bottom protrusions are formed to protrude from the center of the bottom surface of the storage space (322) in a longitudinal direction, a central shaft (324) is embedded in the center in the longitudinal direction, and the central shaft (324) is connected with the connection shaft (321).

5. The automatic weight separator of claim 1, wherein the blocking plates (618) at both sides include a lower-layer plate (618a) formed on one side to prevent the deviation of the normal products and a high-layer plate (618b) formed on the other side to prevent the insertion of the defective products.

6. The automatic weight separator of claim 1, wherein the belt unit (610) is provided with tension adjustment members on both sides to adjust the tension of the convey belt (617).

## Patentansprüche

1. Automatischer Gewichtstrenner, der sowohl Mess- als auch Sortiertypfähigkeit hat, umfassend:
eine Rahmeneinheit (100), in welcher eine Vielzahl von Rahmen (140) miteinander verbunden sind;
eine Einführungseinheit (200), in welcher eine Vielzahl von Rutschen (210) mit der Rahmeneinheit (100) gekoppelt und in mehreren Reihen vorgesehen sind, um nach unten zur Vorderseite hin geneigt zu sein, um stabförmige Verpackungsprodukte einzuführen und abzugeben;
eine Messeinheit (300), welche unterhalb der Einführungseinheit (200) vorgesehen ist und die eine Vielzahl von Rotationsmotoren (310), um eine Rotationskraft an Flügelrädern (320) bereitzustellen, wobei die Flügelräder (320) in beiden Richtungen drehbar mit den Rotationsmotoren (310) verbunden sind und die stabförmigen Verpackungsprodukte, die von den Rutschen (210) fallen, speichern, und einen Messsensor (330), der unter dem Rotationsmotor (310) vorgesehen ist, um das Gewicht der stabförmigen Verpackungsprodukte zu messen, das in den Flügelrädern (320) gespeichert ist, beinhaltet;
eine Kontrolleinheit, welche normale Produkte und defekte Produkte durch das Empfangen eines Messsignals von dem Messsensor (330) bestimmt, steuert die Rotationsmotoren (310) gemäß dem bestimmten Ergebnis, um die Flügelräder (320) zu einer Seite oder der anderen Seite zu drehen, und sortiert die normalen Produkte und die defekten Produkte;
eine Antriebseinheit (500), welche einen Antriebsmotor (510), der auf einer Seite unterhalb der Rahmeneinheit (100) vorgesehen ist, eine Rotationswelle (530), die durch eine Antriebskraft des Antriebsmotors (510) rotiert und in einer lateralen Richtung vorgesehen ist, und ein Reibungsblatt (540) beinhaltet, das an einer Außenfläche der Rotationswelle (530) befestigt ist, um eine Bandeinheit (610) durch eine Reibungskraft anzutreiben;
wobei der automatische Gewichtstrenner **dadurch gekennzeichnet ist, dass** er eine Bandeinheit (610), welche auf einer unteren Seite des Flügelrades (320) ausgebildet ist, orthogonal zu der Rotationswelle (530) und angetrieben durch die Reibungskraft mittels des Reibungsblatts (540), um die normalen Produkte, die von den Flügelrädern (320) fallen, zu fördern, und die einen Körper (611), der mit einer runden Nut (611a) versehen ist, die auf einer Rückseite ausgebildet ist, um dem Reibungsblatt (540) zu entsprechen, Rotationsrollen (612), die jeweils an Front- und Rückseiten des Körpers (611) vorgesehen sind, eine Abwärtsführungsrolle (613), die in der Mitte der unteren Seite des Körpers (611) vorgesehen ist, um das Förderband (617) zu der unteren Seite zu führen, eine Aufwärtsführungsrolle (614), die an der Rückseite der unteren Seite des Körpers (611) vorgesehen ist, um das Förderband (617), das nach unten zu dem Reibungselement auf der Oberseite desselben geschlagen wird, zu führen, ein Förderband (617) das auf vorderen und hinteren Rotationsrollen (612) rollt und durch die nach oben gerichtete Führungsrolle (614) und die nach unten gerichtete Führungsrolle (613) geführt wird, um die normalen Produkte durch die Reibungskraft des Reibungsblatts (540) zu fördern, und Blockierplatten (618) beinhaltet, welche vertikal an beiden Seiten des Förderbandes (617) vorgesehen sind, und eine Sortiereinheit (600) umfasst, ausgebildet an der Seite der Bandeinheit (610) und ein Durchgangsloch (620) aufweisen, durch welches die defekten Produkte, die von den Laufrädern (320) fallen, durchlaufen.

2. Automatischer Gewichtstrenner nach Anspruch 1, wobei die Rutsche (210) eine Rutschenplatte (220) beinhaltet, die eine sich allmählich verjüngende und zur Unterseite hin gekrümmt Breite hat, so dass das stabförmige Verpackungsprodukt darauf gleitet, und eine Seitenplatte (230), die auf beiden Seiten der Rutschenplatte (220) platziert ist, um ein Abweichen der stabförmigen Verpackungsprodukte zu verhindern, und einen Sensor, der an dem Rahmen vorgesehen ist, welcher vor der Rutsche (210) vorgesehen ist, um das Fallen der stabförmigen Verpackungsprodukte auf die Laufräder (320) zu sensieren und ein Sensierungssignal an die Steuereinheit zu übertragen.

3. Automatischer Gewichtstrenner nach Anspruch 1, wobei die Messeinheit ferner einen Verbinder (650) umfasst zum Verbinden einer Verbindungswelle (321) des Laufrads (320) und einer Motorwelle (311) des Rotationsmotors (510), um zu ermöglichen, dass das Laufrad (320) mit einer Berührung gelöst wird, wobei die Verbindungswelle (321) eine ringförmige Montagenut (321a) hat, die entlang eines Umfangs ausgebildet ist, so dass ein Teil der Kugel in die Montagenut (321a) eingesetzt ist, wenn die Verbindungswelle (321) eingesetzt und an einem Verbindungsrohr (351) montiert ist, und
der Verbinder (650) ein Verbindungsrohr (351), welches an einer Seite davon vorgesehen ist, so dass die Verbindungswelle (321) eingesetzt ist und eine Vielzahl von Durchgangslöchern (351a) hat, welche entlang des Umfangs ausgebildet sind, so dass die Kugeln in und aus den Durchgangslöchern (351a) bewegbar sind, einen Wellenhalter (352), welcher auf der anderen Seite davon vorgesehen ist, um in die Motorwelle (351) eingesetzt zu werden, und ein Pressrohr (353) beinhaltet, welches eine Feder (353a) hat, die an einer Außenseite des Verbindungsrohrs (351) eingefügt ist, um durch Drücken und Freigeben in beide Seiten bewegt zu werden, und das einen ringförmigen Ringvorsprung hat, der im Inneren ausgebildet ist, um die Kugeln zu drücken, wobei das Pressrohr (353) sich in beide Richtungen bewegt, um die Kugeln von dem Ringvorsprung zu drücken und freizugeben und das Lösen der Verbindungswelle (321) mit einer Berührung zu ermöglichen.

4. Automatischer Gewichtstrenner nach Anspruch 1, wobei das Laufrad (320) so geteilt ist, dass es in eine Vielzahl von Speicherräumen (322) unterteilt ist, wobei der Speicherraum (322) einen invertierten trapezförmigen Querschnitt hat, abgerundete Bodenvorsprünge ausgebildet sind, um von der Mitte der Bodenfläche des Speicherraums (322) in einer Längsrichtung vorzustehen, eine Zentralwelle (324) in der Mitte in der Längsrichtung eingebettet ist und die Zentralwelle (324) mit der Verbindungswelle (321) verbunden ist.

5. Automatischer Gewichtstrenner nach Anspruch 1, wobei die Blockierplatten (618) an den beiden Seiten eine Niedrigschichtplatte (618a), die auf einer Seite ausgebildet ist, um das Abweichen der normalen Produkte zu verhindern, und eine Hochschichtplatte (619b), die auf der anderen Seite ausgebildet ist, um das Einsetzen der defekten Produkte zu verhindern, beinhalten.

6. Automatischer Gewichtstrenner nach Anspruch 1, wobei die Bandeinheit (610) an beiden Seiten mit Spannungsanpassungselementen versehen ist, um die Spannung des Förderbands (617) anzupassen.

## Revendications

1. Séparateur automatique en fonction du poids ayant chacune d'une capacité de type mesure et de type triage, comprenant :
une unité de bâti (100) dans laquelle une pluralité de bâtis (140) sont raccordés entre eux ;
une unité d'introduction (200) dans laquelle une pluralité de goulottes (210) sont couplées à l'unité de bâti (100) et prévues sur plusieurs rangées pour être inclinées vers le bas vers le côté avant afin d'introduire et de décharger des produits d'emballage de bâtonnet ;
une unité de mesure (300) qui est prévue au-dessous de l'unité d'introduction (200) et comprend une pluralité de moteurs rotatifs (310) pour fournir une force de rotation aux impulseurs (320), les impulseurs (320) étant raccordés, en rotation, aux moteurs rotatifs (310) dans deux directions et stockant les produits d'emballage de bâtonnet tombant des goulottes (210), et un capteur de mesure (330) prévu au-dessous du moteur rotatif (310) pour mesurer le poids des produits d'emballage de bâtonnet stockés dans les impulseurs (320) ;
une unité de commande qui détermine les produits normaux et les produits défectueux en recevant un signal de mesure du capteur de mesure (330), commande les moteurs rotatifs (310) selon le résultat de détermination pour faire tourner les impulseurs (320) d'un côté ou de l'autre, et trie les produits normaux et les produits défectueux ;
une unité d'entraînement (500) qui comprend un moteur d'entraînement (510) prévu d'un côté au-dessous de l'unité de bâti (100), un arbre rotatif (530) tournant grâce à une force d'entraînement du moteur d'entraînement (510) et prévu dans une direction latérale, et une feuille de friction (540) fixée sur une surface externe de l'arbre rotatif (530) pour entraîner une unité de courroie (610) par une force de friction ;
le séparateur automatique en fonction du poids étant **caractérisé en ce qu'**il comprend une unité de courroie (610) qui est formée sur un côté inférieur de l'impulseur (320), orthogonale à l'arbre rotatif (530) et entraînée par la force de friction avec la feuille de friction (540) pour transporter les produits normaux tombant des impulseurs (320) et comprend un corps (611) prévu avec une rainure ronde (611a) formée au niveau d'un côté arrière pour correspondre à la feuille de friction (540), des rouleaux rotatifs (612) prévus sur les côtés avant et arrière du corps (611), respectivement, un rouleau de guidage descendant (613) prévu au milieu du côté inférieur du corps (611) pour guider la courroie transporteuse (617) vers le côté inférieur, un rouleau de guidage ascendant (614) prévu au niveau du côté arrière du côté inférieur du corps (611) pour guider la courroie transporteuse (617) frappée vers le bas sur l'élément de friction sur son côté supérieur, une courroie transporteuse (617) enroulée sur les rouleaux rotatifs avant et arrière (612) et guidée par le rouleau de guidage ascendant (614) et le rouleau de guidage descendant (613) pour transporter les produits normaux par la force de friction de la feuille de friction (540), et des plaques de blocage (618) prévues verticalement des deux côtés de la courroie transporteuse (617), et une unité de triage (600) formée sur le côté de l'unité de courroie (610) et ayant un trou débouchant (620) à travers lequel les produits défectueux tombant des impulseurs (320) passent.

2. Séparateur automatique en fonction du poids selon la revendication 1, dans lequel la goulotte (210) comprend une plaque de goulotte (220) ayant une largeur progressivement plus étroite et incurvée vers le côté inférieur de sorte que le produit d'emballage de bâtonnet glisse sur cette dernière, et une plaque latérale (230) placée des deux côtés de la plaque de goulotte (220) pour empêcher la déviation les produits d'emballage de bâtonnet, et un capteur est prévu sur le bâti prévu en face de la goulotte (210) pour détecter les produits d'emballage de bâtonnet tombant des impulseurs (320) et transmettre un signal de détection à l'unité de commande.

3. Séparateur automatique en fonction du poids selon la revendication 1, dans lequel l'unité de mesure comprend en outre un connecteur (650) pour raccorder un arbre de raccordement (321) de l'impulseur (320) et un arbre de moteur (311) du moteur rotatif (510) pour permettre le détachement de l'impulseur (320) d'une simple pression, dans lequel l'arbre de raccordement (321) a une rainure de montage en forme de bague (321a) formée le long d'une circonférence, de sorte qu'une partie de la bille est insérée dans la rainure de montage (321a) lorsque l'arbre de raccordement (321) est inséré et monté sur un tuyau de raccordement (351), et
le connecteur (650) comprend un tuyau de raccordement (351) qui est prévu sur l'un de ses côtés de sorte que l'arbre de raccordement (321) est inséré et a une pluralité de trous débouchants (351a) formés le long de la circonférence de sorte que les billes sont mobiles à l'intérieur et à l'extérieur des trous débouchants (351a), un support d'arbre (352) qui est prévu sur son autre côté pour être inséré avec l'arbre de moteur (351), et un tuyau de pression (353) qui a un ressort (353a) intercalé dans un côté externe du tuyau de raccordement (351) pour être déplacé des deux côtés par pression et libération et a une saillie annulaire en forme de bague formée à l'intérieur pour comprimer les billes, dans lequel le tuyau de pression (353) se déplace des deux côtés pour comprimer et libérer les billes de la saillie annulaire et permettent le détachement d'une simple pression pour l'arbre de raccordement (321).

4. Séparateur automatique en fonction du poids selon la revendication 1, dans lequel l'impulseur (320) est séparé pour être divisé en une pluralité d'espaces de stockage (322), dans lequel l'espace de stockage (322) a une section trapézoïdale inversée, des saillies inférieures arrondies sont formées afin de faire saillie du centre de la surface inférieure de l'espace de stockage (322) dans une direction longitudinale, un arbre central (324) est encastré dans le centre dans la direction longitudinale, et l'arbre central (324) est raccordé avec l'arbre de raccordement (321).

5. Séparateur automatique en fonction du poids selon la revendication 1, dans lequel les plaques de blocage (618) des deux côtés, comprennent une plaque de couche inférieure (618a) formée d'un côté pour empêcher la déviation des produits normaux et une plaque de couche supérieure (618b) formée de l'autre côté pour empêcher l'insertion des produits défectueux.

6. Séparateur automatique en fonction du poids selon la revendication 1, dans lequel l'unité de courroie (610) est prévue avec des éléments d'ajustement de tension des deux côtés pour ajuster la tension de la courroie transporteuse (617).
